# FASCICULE DE BREVET EUROPEEN

(11) **EP 3 898 328 B1**
(45) Date de publication et mention de la délivrance du brevet: **04.01.2023**
(21) Numéro de dépôt: 19813577.4
(22) Date de dépôt: 09.12.2019
(51) Int. Cl.: B60Q 1/12, F21S 41/151, F21S 41/663, F21W 102/145, F21W 102/19, F21W 102/155

(54) **DISPOSITIF LUMINEUX DE VEHICULE AUTOMOBILE**
BELEUCHTUNGSVORRICHTUNG FÜR EIN KRAFTFAHRZEUG
LIGHTING DEVICE FOR A MOTOR VEHICLE

(30) Priorité: 19.12.2018 FR 1873431
(43) Date de publication de la demande: 27.10.2021
(73) Titulaire: Valeo Vision, 93012 Bobigny Cedex (FR)
(72) Inventeur: JOERG, Alexandre, 93012 BOBIGNY Cedex (FR); MARCHAL, Orane, 93012 BOBIGNY Cedex (FR)
(74) Mandataire: Valeo Visibility
(86) Numéro de dépôt international: PCT/EP2019/084213
(87) Numéro de publication internationale: WO 2020/126611

(56) Documents cités:
- WO-A1-2017/121560
- FR-A1- 2 934 669
- JP-A- 2009 220 649
- JP-A- 2018 083 533
- US-A1- 2012 250 338
- US-A1- 2016 069 527
- US-A1- 2018 356 064

## Description

L'invention concerne le domaine de l'éclairage et/ou de signalisation, notamment pour véhicules automobiles. Plus particulièrement, l'invention concerne un dispositif lumineux de véhicule automobile et un procédé de commande du dispositif lumineux.

Les documents US 2018/356064 A1, US 2012/250338 A1, FR 2 934 669 A1 et WO 2017/121560 A1 appartiennent au domaine technique mentionné ci-dessus.

Les véhicules sont de plus en plus équipés de système d'aide à la conduite afin d'améliorer la sécurité des passagers. En particulier, les véhicules peuvent être équipés de dispositifs d'éclairage permettant de réaliser des fonctions d'éclairage adaptatif, encore appelées « Adaptative Driving Beam » ou ADB en anglais.

Dans un premier exemple, le véhicule peut être équipé d'un dispositif d'éclairage pouvant limiter le risque d'éblouissement du conducteur d'un véhicule croisé ou suivi tout en gardant un bon éclairage de la route.

Dans un autre exemple, le véhicule peut être équipé d'un dispositif d'éclairage pouvant projeter un faisceau lumineux qui peut suivre la trajectoire de la voiture dans les virages afin d'éclairer au mieux la route pour le conducteur. Le faisceau lumineux réalise ainsi une fonction d'éclairage de virage dynamique, encore appelée « dynamic bending light » ou DBL en anglais.

Une première façon connue de réaliser un tel faisceau lumineux est d'intégrer dans le dispositif d'éclairage un module lumineux réalisant un faisceau de croisement présentant une coupure et mobile dans le dispositif d'éclairage. Le module lumineux peut alors pivoter en fonction de l'angle du virage que suit le véhicule.

Cette solution présente un grand confort de conduite au conducteur, car elle permet de faire pivoter l'ensemble du faisceau lumineux. Ainsi, la coupure du faisceau de croisement pivote en même temps que le véhicule et suit le virage. Le conducteur voit donc bien la coupure se déplacer, et ce quel que soit le sens du virage. Toutefois, elle présente l'inconvénient d'utiliser des pièces mobiles ce qui entraine un coût et un encombrement plus importants.

Une solution sans pièce mobile a été trouvée et consiste à réaliser un tel faisceau lumineux à l'aide de la superposition d'un faisceau de croisement présentant une coupure, la coupure présentant une première ligne horizontale inférieure et un coude montant pour éclairer une zone supérieure au-dessus d'un axe horizontal passant par ladite première ligne, et d'un deuxième faisceau lumineux comportant une pluralité de segments lumineux activables sélectivement qui sont à cheval sur l'axe horizontal de la coupure du faisceau de croisement. L'intensité lumineuse de chacun des segments lumineux est modulable de sorte à ce que la position d'une zone d'intensité maximale du faisceau lumineux puisse évoluer en fonction des virages que suit le véhicule. Le virage est alors suivi en déplaçant électroniquement la zone d'intensité maximale du faisceau lumineux.

Cependant, en raison de la forte intensité du faisceau de croisement au niveau du coude, les segments lumineux du deuxième faisceau lumineux ne peuvent pas avoir une intensité lumineuse trop élevée pour que le faisceau formé par le dispositif d'éclairage reste réglementaire. Par conséquent, le conducteur n'a pas une bonne perception des segments lumineux du deuxième faisceau lumineux. Le conducteur ne bénéficie donc pas entièrement de la fonction apportée par le deuxième faisceau lumineux.

De plus, lorsque le véhicule suit un virage du côté du coude de la coupure du faisceau de croisement, le coude ne peut pas être déplacé. Il reste fixe par rapport à l'axe optique des moyens d'émission du faisceau de croisement. La distribution lumineuse n'est modifiée qu'en modifiant l'intensité des segments lumineux du deuxième faisceau lumineux. Le conducteur ne perçoit donc pas de déplacement de la coupure du faisceau de croisement, le coude reste toujours visible par le conducteur. Seul la zone d'intensité maximale est déplacée.

Une solution connue pour remédier au problème de perception de la fonction et de déplacement de la coupure du premier faisceau consiste à réaliser le faisceau lumineux à l'aide de la superposition d'un premier faisceau lumineux présentant une coupure horizontale et d'un deuxième faisceau lumineux comportant une pluralité de segments lumineux activables sélectivement qui sont à cheval sur la coupure horizontale du premier faisceau lumineux. L'intensité lumineuse de chacun des segments lumineux est modulable de sorte à ce que la position d'une zone d'intensité maximale du faisceau lumineux puisse évoluer en fonction des virages que suit le véhicule. Le virage est alors suivi en déplaçant électroniquement la zone d'intensité maximale du faisceau lumineux. De plus, comme le premier faisceau lumineux ne présente pas de coude, l'intensité lumineuse des segments lumineux du deuxième faisceau lumineux peuvent avoir une intensité plus importante que dans la solution précédente. En outre, quel que soit le sens du virage, le conducteur perçoit bien un déplacement d'une coupure dans le faisceau lumineux global formé par la superposition du premier faisceau lumineux et du deuxième faisceau lumineux puisque celle-ci est formée par la jonction entre un segment lumineux allumé et un segment lumineux éteint et que le premier faisceau lumineux ne présente pas de coude se superposant aux segments. Elle peut donc bien être déplacée.

Cependant, le premier faisceau lumineux ne forme pas nécessairement un faisceau de croisement réglementaire, notamment au regard de la réglementation UNECE R123 en vigueur à la date du dépôt de la demande, qui s'applique dans les pays européens.. Ainsi, le premier faisceau lumineux ne peut pas être homologué seul dans ces pays là. Seul un faisceau lumineux global résultant de la superposition du premier faisceau lumineux et du deuxième faisceau lumineux peut être homologué s'il concilie les exigences réglementaires qui imposent que l'intensité lumineuse du faisceau lumineux global doit être supérieure à une valeur prédéterminée au niveau de certains points du faisceau lumineux global et doit être inférieure à une autre valeur prédéterminée au niveau de d'autres points. Ceci est difficile à réaliser.

Un but de l'invention est donc de fournir un dispositif d'éclairage réalisant un faisceau lumineux global réglementaire qui soit simple et qui permette de réaliser une fonction d'éclairage de virage dynamique sans pièce mobile, qui soit bien perceptible par le conducteur et qui offre un confort de conduite semblable à celui d'un module mobile.

A cet effet, on prévoit selon l'invention un dispositif lumineux de véhicule automobile comportant :
- des moyens d'émission selon un axe optique d'un premier faisceau lumineux à coupure, la coupure présentant une ligne sensiblement horizontale comprenant une découpe ; la découpe s'étendant dans un repère formé par un axe horizontal repère parallèle à un premier axe horizontal passant par ladite ligne sensiblement horizontale et un axe vertical repère perpendiculaire à l'axe horizontal repère et audit axe optique, ledit axe optique passant par le centre du repère,
- des moyens d'émission d'un deuxième faisceau lumineux divisé horizontalement en plusieurs segments lumineux activables sélectivement, les segments lumineux étant aptes à éclairer une zone située à cheval sur le premier axe horizontal ;
caractérisé en ce que la découpe comprend
- une extrémité longitudinale proximale située dans le repère le long de l'axe horizontal repère entre 1,25° et 1,5° ou entre -1,25° et -1,5° et
- une extrémité verticale inférieure située dans le repère le long de l'axe vertical repère à une hauteur de -0,75° ou en dessous.

On entend par extrémité longitudinale proximale, l'extrémité longitudinale de la découpe qui est située la plus proche de l'axe vertical repère.

Ainsi, grâce à la présente invention, le faisceau lumineux global formé par la superposition du premier faisceau lumineux à coupure et du deuxième faisceau lumineux permet de former un faisceau de croisement réglementaire, notamment conforme à la réglementation UNECE R123 en vigueur à la date du dépôt de la présente demande. Un tel faisceau lumineux global peut également satisfaire à d'autres réglementations. Lorsque le véhicule est conçu pour circuler en circulation droite, la découpe doit être formée sur la partie droite du premier faisceau lumineux. L'extrémité longitudinale proximale de la découpe est située dans le repère le long de l'axe horizontal repère entre 1,25° et 1,5°. Lorsque le véhicule est conçu pour circuler en circulation gauche, la découpe doit être formée sur la partie gauche du premier faisceau lumineux. L'extrémité longitudinale proximale de la découpe est située dans le repère le long de l'axe horizontal repère entre -1,25° et -1,5°.

En effet, grâce à la forme de la découpe, certains points nécessitant une forte intensité restent éclairés à la fois par le premier faisceau lumineux à coupure et par le deuxième faisceau lumineux, ce qui permet d'atteindre une valeur d'intensité prédéterminée par la réglementation et d'autres points qui étaient éclairés dans l'art antérieur à la fois par le premier faisceau lumineux à coupure et par le deuxième faisceau lumineux ne sont à présents éclairés que par le deuxième faisceau lumineux. L'intensité de ces points ne dépasse ainsi pas une valeur prédéterminée par la réglementation.

En particulier si l'on considère la R123 UNECE, lorsque le véhicule circule en circulation droite, le point 75R situé dans le repère le long de l'axe horizontal repère à 1,25° et le long de l'axe vertical repère à une hauteur de -0,57° est éclairé par le premier faisceau lumineux à coupure et par le deuxième faisceau lumineux. Une valeur d'intensité suffisamment élevée peut donc être atteinte. Et, le point Emax situé dans le repère le long de l'axe horizontal repère entre 1,5° et 2° et le long de l'axe vertical repère à une hauteur de -0,57° est éclairé uniquement par le deuxième faisceau lumineux. Ainsi, l'intensité du point Emax ne dépasse pas une valeur prédéterminée.

Ainsi, pour les points éclairés uniquement par le deuxième faisceau lumineux, l'intensité du segment lumineux du deuxième faisceau lumineux éclairant ce point peut être plus élevée, tout en gardant une valeur d'intensité en dessous de la valeur prédéterminée, On dispose ainsi d'une plus grande amplitude d'intensités lumineuses possibles pour les segments lumineux superposés avec la découpe. Le déplacement d'une zone d'intensité lumineuse maximale dans le deuxième faisceau lumineux est alors d'autant plus perceptible car la différence d'intensité lumineuse entre les différents segments lumineux peut être accentuée.

De plus, le déplacement de la zone d'intensité lumineuse maximale du deuxième faisceau lumineux permet également de déplacer la zone d'intensité lumineuse maximale du faisceau lumineux global. Ainsi, comme le déplacement de la zone d'intensité lumineuse maximale dans le deuxième faisceau lumineux est plus perceptible, il est également plus perceptible dans le faisceau lumineux global. Le conducteur perçoit alors mieux le déplacement de la zone d'intensité lumineuse maximale dans le faisceau lumineux global, c'est-à-dire qu'il perçoit mieux la fonction d'éclairage dynamique.

En outre, lorsque la zone d'intensité lumineuse maximale est déplacée, la jonction entre un segment lumineux allumé et un segment lumineux éteint formant une coupure peut également être déplacée et ce déplacement peut être perceptible par le conducteur quel que soit le sens du déplacement. En effet, le premier faisceau lumineux ne présente aucun coude montant gênant la perception de cette jonction. Un confort de conduite semblable à celui d'un module lumineux mobile est alors obtenu.

Les moyens d'émission du premier faisceau lumineux et les moyens d'émission du deuxième faisceau lumineux peuvent être situés dans un même module lumineux. De manière alternative, ils peuvent être chacun dans un module lumineux distinct. Le cas échéant, les modules lumineux peuvent être intégrés dans le même projecteur du véhicule ou dans des projecteurs séparés.

L'extrémité longitudinale proximale de la découpe est formée par un segment qui peut être parallèle à l'axe vertical repère ou par un segment oblique, c'est-à-dire qui présente une inclinaison par rapport à l'axe vertical repère.

Sa position dans le repère le long de l'axe horizontal repère est prise au niveau de la ligne sensiblement horizontale, ce qui correspond à l'extrémité supérieure du segment formant l'extrémité longitudinale proximale de la découpe.

Dans un premier exemple, la découpe peut être délimitée uniquement par l'extrémité longitudinale proximale et l'extrémité verticale inférieure. Le premier faisceau lumineux présente alors un décrochement sur toute sa largeur à partir de l'extrémité longitudinale proximale.

Dans un deuxième exemple, la découpe peut être délimitée par l'extrémité longitudinale proximale, l'extrémité verticale inférieure et une extrémité longitudinale distale qui est l'extrémité située la plus loin de l'axe vertical repère. La découpe forme alors une encoche dans le premier faisceau lumineux.

Avantageusement, le dispositif lumineux présente deux segments lumineux voisins présentant une jonction superposée à l'axe vertical repère. Ainsi, la jonction entre ces deux segments voisins permet de pouvoir réaliser une coupure dans le faisceau lumineux global au niveau de l'axe vertical repère.

De préférence, les segments lumineux du deuxième faisceau lumineux comprennent une extrémité verticale inférieure et la hauteur de l'extrémité verticale inférieure de chacun des segments lumineux qui sont superposés avec la découpe est située dans le repère le long de l'axe vertical repère à -0,75° ou en dessous et la hauteur de l'extrémité verticale inférieure de la découpe est sensiblement identique à la hauteur de l'extrémité verticale inférieure du segment lumineux qui a l'extrémité verticale inférieure la plus haute parmi tous les segments lumineux qui sont superposés avec la découpe. On entend par sensiblement identique qu'il peut y avoir un léger recouvrement entre les segments lumineux et la découpe afin que le faisceau lumineux global soit homogène. Ainsi, les segments lumineux du deuxième faisceau lumineux qui recouvrent en totalité une partie de la découpe ne sont pas superposés avec le premier faisceau lumineux. Ainsi ; l'intensité lumineuse des segments lumineux qui recouvrent en totalité une partie de la découpe n'est pas limitée par l'intensité lumineuse du premier faisceau lumineux à coupure. Il est donc plus facile de contrôler l'intensité lumineuse au niveau de la découpe, et les segments lumineux peuvent avoir une intensité plus importante ce qui les rend plus visibles.

Par exemple, les extrémités verticales inférieures de chaque segment lumineux du deuxième faisceau lumineux sont toutes situées à la même hauteur le long de l'axe vertical repère à -0,75° ou en dessous et la hauteur de l'extrémité verticale inférieure de la découpe est sensiblement identique à la hauteur de l'extrémité verticale inférieure des segments lumineux.

Avantageusement, la coupure du premier faisceau lumineux présente une deuxième découpe comportant une extrémité longitudinale proximale située dans le repère le long de l'axe horizontal repère à -3° ou moins, lorsque l'extrémité longitudinale proximale de la découpe est située entre 1,25° et 1,5°, ou à 3° ou plus, lorsque l'extrémité longitudinale proximale de la découpe est située entre - 1,25° et 1,5°. Ainsi, on peut augmenter l'intensité lumineuse des segments lumineux qui sont superposés avec la deuxième découpe et avoir une plus grande amplitude d'intensités lumineuses possibles pour ces segments lumineux.

Avantageusement, la deuxième découpe comporte une extrémité verticale inférieure située dans le repère le long de l'axe vertical repère (VR) à une hauteur de -0,75° ou en dessous.

Avantageusement, la hauteur de l'extrémité verticale inférieure de la deuxième découpe est identique à la hauteur de l'extrémité verticale inférieure de la découpe.

Avantageusement, le deuxième faisceau lumineux est apte à éclairer au-dessus du premier axe horizontal sur toute la largeur du premier faisceau lumineux à coupure. Ainsi, toute la largeur de la scène qui peut être éclairée par le premier faisceau lumineux peut aussi être éclairée par le deuxième faisceau lumineux. La fonction d'éclairage dynamique peut alors être réalisée sur toute la largeur du premier faisceau lumineux à coupure.

Selon une première variante, tous les segments lumineux du deuxième faisceau lumineux présentent une largeur, prise le long de l'axe horizontal repère, identique. Cette configuration permet d'avoir une résolution identique sur toute la largeur du deuxième faisceau lumineux.

Selon une deuxième variante, au moins deux segments lumineux du deuxième faisceau lumineux présentent une largeur, prise le long de l'axe horizontal repère, différente. Cette configuration permet de diminuer le nombre de segments lumineux et donc de diminuer le coût du dispositif lumineux.

En particulier, les segments lumineux du deuxième faisceau lumineux présentent une largeur plus grande à mesure que l'on s'éloigne de l'axe vertical repère. Le nombre de segments lumineux est ainsi bien réduit tout en conservant une meilleure résolution proche de l'axe optique des moyens d'émission du premier faisceau lumineux.

Dans un premier exemple, l'augmentation de la largeur des segments lumineux à mesure que l'on s'éloigne de l'axe vertical repère peut être continue. Dans ce cas, la largeur de chaque segment lumineux suivant un segment lumineux qui est situé plus près de l'axe vertical repère est plus grande que la largeur de ce segment lumineux situé plus près de l'axe vertical repère.

Dans un deuxième exemple, l'augmentation de la largeur des segments lumineux à mesure que l'on s'éloigne de l'axe vertical repère peut être par palier. Dans ce cas, les segments lumineux sont répartis en groupes de segments lumineux de même largeur ; et la largeur des segments lumineux de chaque groupe de segments lumineux suivant un groupe de segments lumineux qui est situé plus près de l'axe vertical repère est plus grande que la largeur des segments lumineux de ce groupe de segments lumineux plus près de l'axe vertical repère.

Avantageusement, l'intensité lumineuse de chaque segment lumineux est susceptible d'être modulée individuellement entre un état éteint et un état d'intensité lumineuse maximale. Ainsi, il est possible de déplacer la zone d'intensité lumineuse maximale du deuxième faisceau lumineux, et donc le la zone d'intensité lumineuse maximale du faisceau lumineux global.

En particulier, les segments lumineux du deuxième faisceau lumineux peuvent être activés à 50% de leur intensité lumineuse maximale, voire à 70%. En activant les segments lumineux avec cette intensité lumineuse, cela permet de disposer d'une grande amplitude d'intensités lumineuses possible pour chaque segment lumineux tout, et donc d'une meilleure gestion de la distribution lumineuse du deuxième faisceau lumineux tout en formant un faisceau lumineux global qui est règlementaire.

Avantageusement, l'intensité lumineuse des segments lumineux du deuxième faisceau lumineux peut être modulée de sorte à ce que le faisceau lumineux global résultant de la superposition du premier faisceau lumineux à coupure et du deuxième faisceau lumineux forme un faisceau de croisement réglementaire selon la réglementation UNECE R123 en vigueur à la date du dépôt de la présente demande.

Avantageusement, l'intensité lumineuse des segments lumineux du deuxième faisceau lumineux peut être modulée de sorte à ce que faisceau lumineux global résultant de la superposition du premier faisceau lumineux à coupure et du deuxième faisceau lumineux forme un faisceau d'éclairage de virage dynamique (également appelé Dynamic Bending Light ou DBL en anglais)

Avantageusement, le deuxième faisceau lumineux présente deux lignes de segments lumineux superposées, les segments lumineux de la ligne inférieure étant aptes à éclairer la zone située à cheval sur le premier axe horizontal. Les segments lumineux de la ligne supérieure peuvent alors compléter la distribution lumineuse formée par la ligne inférieure de sorte à former une autre fonction d'éclairage.

L'invention concerne également un procédé de commande du dispositif lumineux selon l'invention.

Avantageusement, l'intensité lumineuse de chacun des segments lumineux du deuxième faisceau lumineux situés à cheval sur le premier axe horizontal est modulée de sorte à ce que la position d'une zone d'intensité lumineuse maximale du faisceau lumineux global formé par la superposition du premier faisceau lumineux et du deuxième faisceau lumineux est décalée en cas de virage du véhicule.

Avantageusement, le décalage de la zone d'intensité lumineuse maximale est en rapport avec le rayon de courbure du virage. Ainsi plus le rayon de courbure est petit et plus le décalage de la zone d'intensité lumineuse maximale par rapport à l'axe optique du premier faisceau lumineux sera important. Cela garantit un éclairage optimal du virage.

D'autres caractéristiques et avantages de la présente invention apparaîtront plus clairement à l'aide de la description et des dessins parmi lesquels :
- la [Figure 1] est une vue de côté de l'avant d'un véhicule automobile équipé d'un dispositif selon l'invention ;
- la [Figure 2] représente la projection sur un écran d'un premier faisceau lumineux à coupure selon un premier exemple de réalisation ;
- la [Figure 3] représente la projection sur un écran d'un premier faisceau lumineux à coupure selon un deuxième exemple de réalisation
- la [Figure 4] représente la projection sur un écran d'un deuxième faisceau lumineux ;
- la [Figure 5] représente la projection sur un écran du faisceau lumineux global résultant de la superposition du premier faisceau lumineux à coupure selon le premier exemple de réalisation dont la projection est représentée à la [Figure 2] et du deuxième faisceau lumineux dont la projection est représentée à la [Figure 4] lorsque le véhicule circule en ligne droite ;
- la [Figure 6] représente la projection sur un écran du faisceau lumineux global résultant de la superposition du premier faisceau lumineux à coupure selon le premier exemple de réalisation dont la projection est représentée à la [Figure 2] et du deuxième faisceau lumineux lorsque le véhicule tourne vers la droite ;
- la [Figure 7] représente la projection sur un écran du faisceau lumineux global résultant de la superposition du premier faisceau lumineux à coupure selon le premier exemple de réalisation dont la projection est représentée à la [Figure 2] et du deuxième faisceau lumineux lorsque le véhicule tourne vers la gauche ;

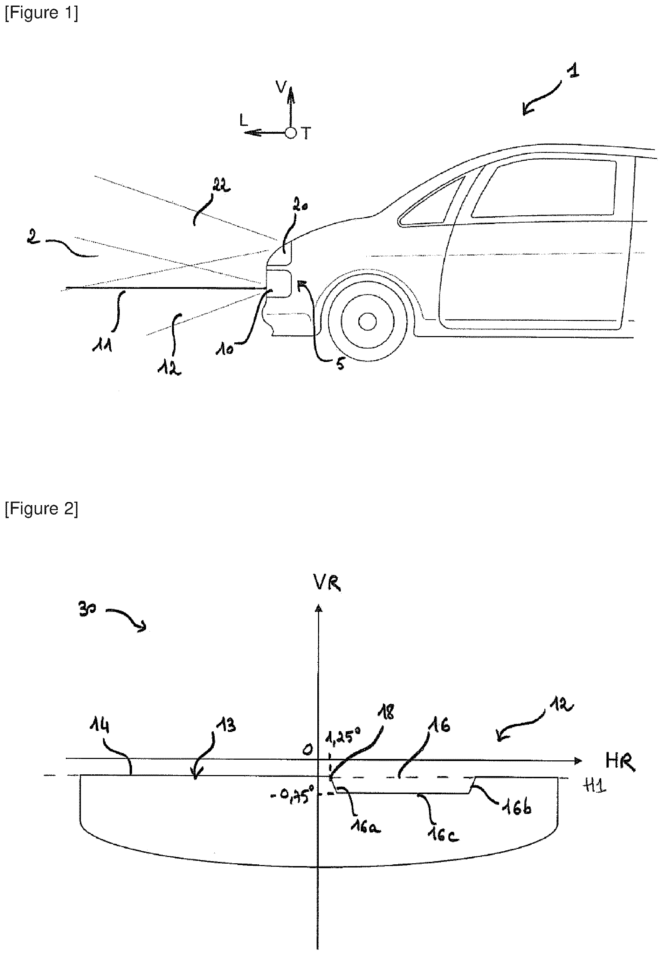

Dans la suite de la description on entendra par direction longitudinale L la direction selon laquelle se déplace le véhicule, on entendra par direction transversale T la direction s'étendant transversalement au véhicule et qui est perpendiculaire à la direction longitudinale, et on entendra par direction verticale V la direction s'étendant de bas en haut du véhicule et qui est perpendiculaire à la direction longitudinale et à la direction transversale. Ces directions sont représentées par le trièdre L, V, T à la [Figure 1].

Par la suite, le terme « intensité » utilisé sans plus de précision se rapportera à l'intensité lumineuse.

La [Figure 1] représente schématiquement un véhicule automobile 1 équipé d'un dispositif lumineux 5 selon la présente invention. Le dispositif lumineux 5 est fixe par rapport au véhicule 1.

Le dispositif lumineux 5 comporte un premier module lumineux 10 comprenant des moyens d'émission selon un axe optique 11 longitudinal d'un premier faisceau lumineux 12 à coupure et un deuxième module lumineux 20 comprenant des moyens d'émission d'un deuxième faisceau lumineux 22. Les moyens d'émission du premier faisceau lumineux 12 et du deuxième faisceau lumineux 22 sont représenté sur la [Figure 1] comme étant dans des modules lumineux distincts. Toutefois, ils pourraient être dans le même module lumineux.

Le dispositif lumineux 5 est apte à projeter un faisceau lumineux global 2 résultant de la superposition du premier faisceaux lumineux 12 à coupure et du deuxième faisceau lumineux 22.

Les figures 2 à 7 représentent la projection sur un écran 30 transversal vertical situé à 25 m en avant du véhicule 1 du premier faisceau lumineux 12 à coupure et/ou du deuxième faisceau lumineux 22.

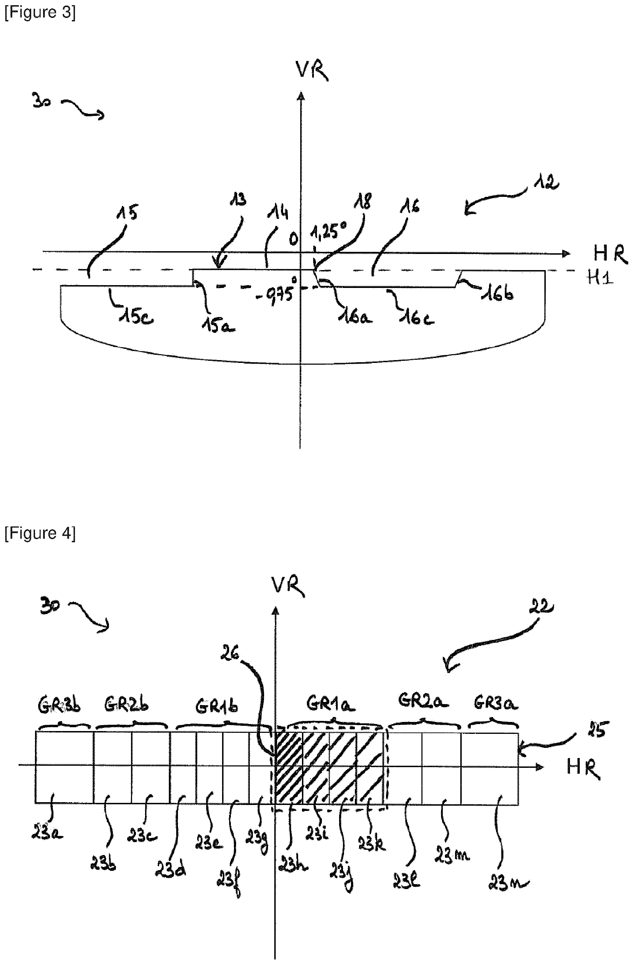

La [Figure 2] et la [Figure 3] représentent respectivement la projection sur l'écran 30 d'un premier exemple de réalisation du premier faisceaux lumineux 12 à coupure et la projection sur l'écran 30 d'un deuxième exemple de réalisation du premier faisceau lumineux 12 à coupure.

Dans chacun de ces exemples de réalisation, le premier faisceau lumineux 12 à coupure éclaire une portion qui est délimitée verticalement vers le haut par une coupure 13. La coupure 13 présente une ligne sensiblement horizontale 14 comprenant une découpe 16. La projection du premier faisceau lumineux 12 à coupure s'étend dans un repère formé par un axe horizontal repère HR parallèle à un premier axe horizontal H1 passant par la ligne sensiblement horizontale 14 et un axe vertical repère VR perpendiculaire à l'axe horizontal repère HR et à l'axe optique 11 des moyens d'émission du premier faisceau lumineux 12 à coupure. L'axe optique 11 passe par le centre O du repère.

La ligne sensiblement horizontale 14 est située à une hauteur de -0,57° et la découpe 16 comprend une extrémité longitudinale proximale 16a située dans le repère le long de l'axe horizontal repère HR à 1,25° et une extrémité verticale inférieure 16c située dans le repère le long de l'axe vertical repère VR à une hauteur de -0,75°. La découpe 16 comprend également une extrémité longitudinale distale 16b. La découpe 16 forme alors une encoche dans le premier faisceau lumineux 12.

Dans un exemple non représenté, la découpe pourrait comprendre uniquement une extrémité longitudinale proximale et une extrémité verticale inférieure, formant ainsi une découpe sur toute la largeur du premier faisceau lumineux à partir de l'extrémité longitudinale proximale.

L'extrémité longitudinale proximale 16a est formée par un segment oblique, c'est-à-dire qui présente une inclinaison par rapport à l'axe vertical repère VR. La position de l'extrémité longitudinale proximale 16a dans le repère le long de l'axe horizontal repère HR est prise au niveau de la ligne sensiblement horizontale 14, ce qui correspond à l'extrémité supérieure 18 du segment formant l'extrémité longitudinale proximale 16a de la découpe 16.

L'extrémité longitudinale distale 16b est également formée par un segment oblique. L'extrémité verticale inférieure 16c est formée par un segment parallèle à l'axe horizontal repère HR et joignant les extrémités inférieures des segments obliques formant les extrémités longitudinales proximale 16a et distale 16b.

Sur la [Figure 3], la coupure 13 présente une deuxième découpe 15 comportant uniquement une extrémité longitudinales proximale 15a située dans le repère le long de l'axe horizontal repère à -3° et une extrémité verticale inférieure 15c située dans le repère le long de l'axe vertical repère à une hauteur de -0,75°, c'est-à-dire à la même hauteur que l'extrémité verticale inférieure 16c de la découpe 16. Le premier faisceau lumineux 12 est découpé sur toute sa largeur à partir de l'extrémité longitudinale proximale 15a.

L'extrémité longitudinale proximale 15c de la deuxième découpe 15 est formée par un segment parallèle à l'axe vertical repère VR.

Dans le cas où le véhicule 1 circulerait en circulation gauche, la projection du premier faisceau lumineux à coupure serait le symétrique de la projection du premier faisceau lumineux 12 à coupure représentée à la [Figure 2] et à la [Figure 3] par rapport à l'axe vertical VR. L'extrémité longitudinale proximale 16a de la découpe 16 serait située dans le repère le long de l'axe horizontal repère HR à - 1,25° et, le cas échéant, l'extrémité longitudinale proximale 15a de la deuxième découpe 15 serait située dans le repère le long de l'axe horizontal repère HR à 3°.

La [Figure 4] représente la projection sur l'écran 30 du deuxième faisceau lumineux 22. Le deuxième faisceau lumineux 22 est divisé horizontalement en plusieurs segments lumineux 23a à 23n activables sélectivement et formant une ligne 25. Le deuxième faisceaux lumineux 22 est représenté dans le même repère que celui décrit en relation avec les figures 2 et 3. Le deuxième faisceau lumineux 22 est ici divisé en 14 segments 23a à 23n qui éclairent chacun une zone correspondante sur l'écran 30. Les segments 23a à 23n sont susceptibles de se chevaucher transversalement légèrement pour garantir un éclairage homogène.

Les segments lumineux 23a à 23n présentent des largeurs, prises le long de l'axe horizontal repère HR, différentes. La largeur des segments lumineux 23a à 23n augmente par palier à mesure que l'on s'éloigne de l'axe vertical repère VR. Les segments lumineux 22a à 23n sont répartis en groupes de segments lumineux de même largeur.

Du côté droit de l'axe vertical repère VR, un premier groupe droit GR1a comprend les segments lumineux 23h à 23k, un deuxième groupe droit GR2a comprend les segments lumineux 23l et 23m et un troisième groupe droit GR3a comprend le segment lumineux 23n. Du côté gauche de l'axe vertical repère VR, un premier groupe gauche GR1b comprend les segments lumineux 23d à 23g, un deuxième groupe gauche GR2b comprend les segments lumineux 23b et 23c et un troisième groupe gauche GR3b comprend le segment lumineux 23a.

Le premier groupe droit GR1a et le premier groupe gauche GR1b sont les groupes les plus proches de l'axe vertical repère VR. Le deuxième groupe droit GR2a et le deuxième groupe gauche GR2b suivent respectivement le premier groupe droit GR1a et le premier groupe gauche GR1b en s'éloignant de l'axe vertical repère VR. Le troisième groupe droit GR3a et le troisième groupe gauche GR3b suivent respectivement le deuxième groupe GR2a et le deuxième groupe GR2b en s'éloignant de l'axe vertical repère VR.

La largeur du segment lumineux 23n du troisième groupe droit GR3a est supérieure à la largeur des segments lumineux 23l et 23m du deuxième groupe droit GR2a qui est elle-même supérieure à la largeur des segments lumineux 23h à 23k du premier groupe droit GR1a.

De même, la largeur du segment lumineux 23a du troisième groupe gauche GR3b est supérieur à la largeur des segments lumineux 23b et 23c du deuxième groupe gauche GR2b qui est elle-même supérieure à la largeur des segments lumineux 23e à 23g du premier groupe gauche GR1b.

La résolution du deuxième faisceau lumineux 22 est ainsi adaptée à l'intérêt que présente la zone de la route qui est éclairée. La résolution proche de l'axe vertical repère VR et donc proche de l'axe optique 11 des moyens d'émission du premier faisceau lumineux 12 est supérieure à la résolution lorsque l'on s'éloigne de l'axe optique 11. On limite ainsi le nombre de segments lumineux tout en conservant une résolution suffisante proche de l'axe optique 11.

Dans une variante non représentée, le deuxième faisceau lumineux 22 présente une deuxième ligne de segments lumineux activables sélectivement et superposés à la ligne 25 de segments lumineux 23a, ..., 23n. Ces segments lumineux peuvent alors compléter la distribution formée par la ligne 25 de sorte à former une fonction de feu de route.

L'intensité lumineuse de chaque segment lumineux 23a à 23n est susceptible d'être modulée individuellement entre un état éteint et un état d'intensité lumineuse maximale, l'intensité pouvant être modulée entre ces deux extrêmes. Chaque segment 23a à 23n est par exemple illuminé par une diode électroluminescent associée dont l'intensité peut être commandée individuellement.

L'intensité lumineuse des segments 23a, ..., 23n est limitée par l'intensité lumineuse du faisceau lumineux global 32 qui ne doit pas dépasser une valeur d'intensité prédéterminée sur la zone recouverte par le deuxième faisceau lumineux 22 pour être réglementaire. Par exemple, l'intensité lumineuse du faisceau global ne doit pas dépasser 44 100 cd dans cette zone.

Les segments lumineux 23a à 23n peuvent être activés à 50% de leur intensité maximale voire à 70% de leur intensité maximale sans que l'intensité lumineuse du faisceau lumineux global 32 ne dépasse la valeur d'intensité prédéterminée.

Sur les figures 4 à 7, les segments lumineux présentant une intensité plus importante comparativement à l'intensité des autres segments lumineux sont hachurés. Plus les hachures sont serrées et plus l'intensité lumineuse est élevée.

Ainsi, à la [Figure 4], le segment lumineux 23h présente l'intensité lumineuse la plus élevée et la zone sur l'écran recouverte par les segments lumineux 23h à 23k est une zone d'intensité lumineuse maximale 24. Ainsi la zone d'intensité maximale 24 est située dans une zone proche de l'axe optique 11. Grâce à la modulation individuelle de l'intensité lumineuse des segments lumineux 23a à 23n, il est possible de déplacer la zone d'intensité lumineuse maximale 24 du deuxième faisceau lumineux 22.

Les segments lumineux 23a à 23n présentent une jonction avec chacun de leur(s) segment(s) lumineux voisins. Une coupure peut ainsi être formée dans le deuxième faisceau lumineux 22 au niveau de chacune de ces jonctions.

Les segments lumineux voisins 23g et 23h présentent une jonction 26 superposée à l'axe vertical repère VR. La jonction entre ces deux segments voisins 23g, 23h permet de pouvoir réaliser une coupure dans le deuxième faisceau lumineux 22 au niveau de l'axe vertical repère VR.

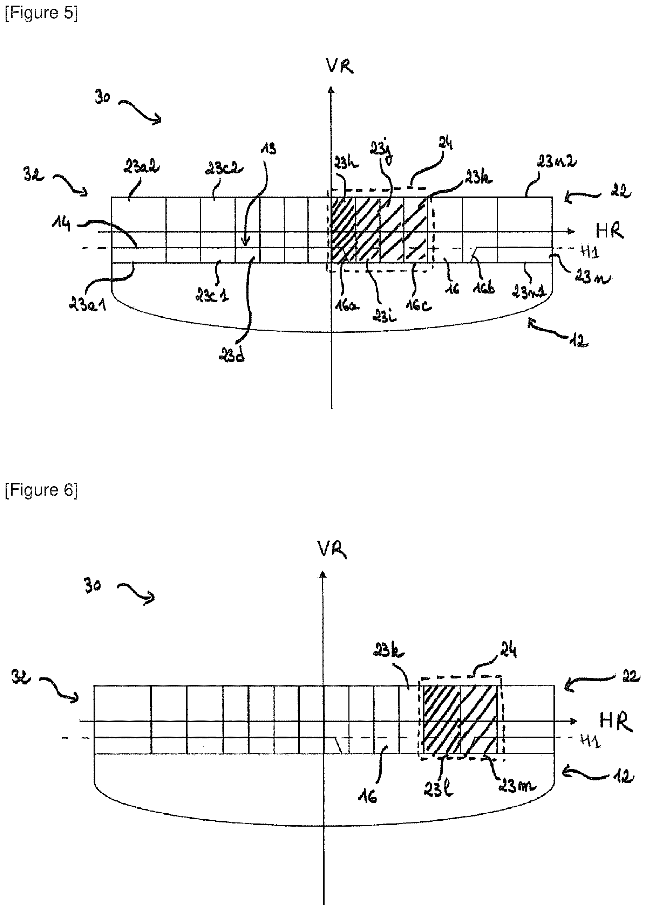

La [Figure 5] représente la projection sur l'écran 30 d'un faisceau lumineux global 32 résultant de la superposition du premier faisceau lumineux 12 à coupure selon le premier exemple de réalisation dont la projection est représentée à la [Figure 2] et du deuxième faisceau lumineux 22 dont la projection est représentée à la [Figure 4] lorsque le véhicule 1 circule en ligne droite.

Il est également possible de superposer le premier faisceau lumineux 12 à coupure selon le deuxième exemple de réalisation dont la projection est représentée à la [Figure 3] et le deuxième faisceau lumineux 22 dont la projection est représentée à la [Figure 4].

Les segments lumineux 23a à 23n éclairent une zone située à cheval sur le premier axe horizontal H1. Chaque segment lumineux 23a à 23n comprend une extrémité verticale inférieure 23a1 à 23n1 et une extrémité verticale supérieure 23a2 à 23n2. L'ensemble des références n'ont pas été représentées afin de permettre une meilleure lisibilité de la figure. Le premier axe horizontal H1 est situé entre l'extrémité verticale inférieure 23a1 à 23n1 et l'extrémité verticale supérieure 23a2 à 23n2 de chacun des segments lumineux 23a à 23n.

Les extrémités verticales inférieures 23a1 à 23n1 des segments lumineux 23a à 23n du deuxième faisceau lumineux 22 sont toutes situées à la même hauteur le long de l'axe vertical repère à -0,75°. La hauteur de l'extrémité verticale inférieure 16c de la découpe 16 est sensiblement identique à la hauteur de l'extrémité verticale inférieure 23a1 à 23n1 des segments lumineux 23a à 23n. La découpe 16 et les segments lumineux 23a à 23n pourront légèrement se recouvrir afin de permettre une bonne homogénéité du faisceau lumineux global 32. Ainsi, l'intensité lumineuse des segments lumineux 23i à 23l qui recouvrent en totalité une partie de la découpe 16 n'est pas limitée par l'apport d'intensité lumineuse du premier faisceau lumineux 12 à coupure. Il est donc plus facile de contrôler l'intensité lumineuse au niveau de la découpe 16, et les segments lumineux 23i à 23l peuvent avoir une intensité plus importante, ce qui les rend plus visibles.

L'intensité lumineuse des segments lumineux du deuxième faisceau lumineux 22 peut être modulée de sorte à ce que le faisceau lumineux global 32 forme un faisceau de croisement selon la réglementation UNECE R123 en vigueur à la date du dépôt de la présente demande.

La coupure du faisceau de croisement est formée par une jonction entre deux segments lumineux voisins, en particulier, elle peut être réalisée par la jonction 26 entre les segments lumineux 23g et 23h. Dans ce cas, l'intensité lumineuse des segments lumineux 23a à 23g est nulle et l'intensité lumineuse des segments 23h à 23n est non nulle, l'intensité de ces segments lumineux 23h à 23n étant décroissante depuis le segments lumineux 23h vers le segments lumineux 23n.

L'intensité lumineuse des segments lumineux 23a à 23n du deuxième faisceau lumineux 22 peut également être modulée de sorte à ce que le faisceau lumineux global 32 forme un faisceau d'éclairage de virage dynamique.

En modulant l'intensité des segments lumineux 23a à 23n, la zone d'intensité lumineuse maximale 24 peut être déplacée. La zone d'intensité maximale du faisceau lumineux global 32 est alors elle aussi déplacée. L'intensité lumineuse du faisceau lumineux global 32 peut alors être adaptée en fonction du sens des virages que prend le véhicule 1 et en fonction du rayon de courbure des virages. Et la coupure du deuxième faisceau lumineux 22 formée par la jonction entre deux segments lumineux voisins peut également être déplacée.

Le deuxième faisceau lumineux 22 éclaire au-dessus du premier axe horizontal H1 sur toute la largeur du premier faisceau lumineux 12 à coupure. Toute la largeur de la scène éclairée par le premier faisceau lumineux 12 à coupure peut ainsi être éclairée par le deuxième faisceau lumineux 22. La fonction d'éclairage dynamique peut alors être réalisée sur toute la largeur du premier faisceau lumineux 12 à coupure.

Sur la [Figure 5], le véhicule 1 circule en ligne droite. La zone d'intensité maximale 24 est située proche de l'axe optique 11.

La [Figure 6] illustre le cas où le véhicule 1 prend un virage à droite. La zone d'intensité maximale 24 est décalée vers la droite par rapport à la zone d'intensité maximale 24 présentée à la [Figure 5]. La zone d'intensité maximale 24 est ici formée par les segments lumineux 23l, 23m qui présentent l'intensité lumineuse la plus élevée parmi tous les segments lumineux 23a, ..., 23n. La coupure du deuxième faisceau lumineux 22 est également décalée. Elle est formée par la jonction entre les segments lumineux voisins 23k et 23l. L'intensité lumineuse des segments lumineux 23a à 23k est nulle et l'intensité lumineuse des segments 23l à 23n est non nulle, l'intensité de ces segments lumineux 23l à 23n étant décroissante depuis le segments lumineux 23l vers le segments lumineux 23n.

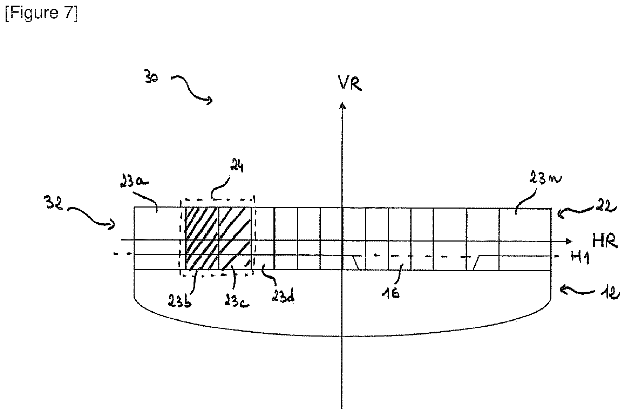

La [Figure 7] illustre le cas où le véhicule 1 prend un virage à gauche. La zone d'intensité maximale 24 est décalée vers la gauche par rapport à la zone d'intensité maximale présentée à la [Figure 5]. La zone d'intensité maximale 24 est ici formée par les segments lumineux 23b, 23c qui présentent l'intensité lumineuse la plus élevée parmi tous les segments lumineux 23a, ..., 23n. La coupure du deuxième faisceau lumineux 22 est également décalée. Elle est formée par la jonction entre les segments lumineux voisins 23a et 23b. L'intensité lumineuse du segment lumineux 23a est nulle et l'intensité lumineuse des segments 23b à 23n est non nulle, l'intensité de ces segments lumineux 23b à 23n étant décroissante depuis le segments lumineux 23b vers le segments lumineux 23n.

Le décalage de la zone d'intensité maximale 24 par rapport à l'axe optique 11 du premier faisceau lumineux 12 est en rapport avec le rayon de courbure du virage. Plus le rayon de courbure est petit et plus le décalage de la zone d'intensité maximale 24 par rapport à l'axe optique 11 sera important. Le virage est alors éclairé de façon optimale.

## Revendications

1. Dispositif lumineux (5) de véhicule automobile (1) comportant
- des moyens d'émission selon un axe optique (11) d'un premier faisceau lumineux (12) à coupure, la coupure (13) présentant une ligne sensiblement horizontale (14) comprenant une découpe (16) ; la découpe s'étendant dans un repère formé par un axe horizontal repère (HR) parallèle à un premier axe horizontal (H1) passant par ladite ligne sensiblement horizontale (14) et un axe vertical repère (VR) perpendiculaire à l'axe horizontal repère (HR) et audit axe optique (11), ledit axe optique (11) passant par le centre du repère,
- des moyens d'émission d'un deuxième faisceau lumineux (22) divisé horizontalement en plusieurs segments lumineux (23a, ..., 23n) activables sélectivement, les segments lumineux (23a, ..., 23n) étant aptes à éclairer une zone située à cheval sur le premier axe horizontal (H1) ;
**caractérisé en ce que** la découpe (16) comprend
- une extrémité longitudinale proximale (16a) située dans le repère le long de l'axe horizontal repère (HR) entre 1,25° et 1,5° ou entre -1,25° et -1,5° et
- une extrémité verticale inférieure (16c) située dans le repère le long de l'axe vertical repère (VR) à une hauteur de -0,75° ou en dessous.

2. Dispositif lumineux (5) selon la revendication précédente, **caractérisé en ce qu'**il présente deux segments lumineux voisins (23g, 23h) présentant une jonction (26) superposée à l'axe vertical repère (VR).

3. Dispositif lumineux (5) selon l'une des revendications précédentes, **caractérisé en ce que** les segments lumineux (23a, ..., 23n) du deuxième faisceau lumineux (22) comprennent une extrémité verticale inférieure (23a1, ..., 23n1) et **en ce que** la hauteur de l'extrémité verticale inférieure (23i1, ..., 23l1) de chacun des segments lumineux (23i, ..., 23l) qui sont superposés avec la découpe (16) est située dans le repère le long de l'axe vertical repère (VR) à -0,75° ou en dessous et **en ce que** la hauteur de l'extrémité verticale inférieure (16c) de la découpe (16) est sensiblement identique à la hauteur de l'extrémité verticale inférieure du segment lumineux (23i1, ..., 23I1) qui a l'extrémité verticale inférieure la plus haute parmi tous les segments lumineux (23i, ..., 23l) qui sont superposés avec la découpe (16).

4. Dispositif lumineux selon la revendication précédente, **caractérisée en ce que** les extrémités verticales inférieures (23a1, ..., 23n1) de chaque segment lumineux (23a, ..., 23n) du deuxième faisceau lumineux (22) sont toutes situées à la même hauteur le long de l'axe vertical repère (VR) à - 0,75° ou en dessous et **en ce que** la hauteur de l'extrémité verticale inférieure (16c) de la découpe (16) est sensiblement identique à la hauteur de l'extrémité verticale inférieure (23a1, ..., 23n1) des segments lumineux (23a, ..., 23n).

5. Dispositif lumineux (5) selon l'une des revendications précédentes, **caractérisé en ce que** la coupure (13) du premier faisceau lumineux (12) présente une deuxième découpe (15) comportant une extrémité longitudinale proximale (15a) située dans le repère le long de l'axe horizontal repère (HR) à -3° ou moins, lorsque l'extrémité longitudinale proximale (16a) de la découpe (16) est située entre 1,25° et 1,5°, ou à 3° ou plus, lorsque l'extrémité longitudinale proximale (16a) de la découpe (16) est située entre - 1,25° et -1,5°.

6. Dispositif lumineux (5) selon l'une quelconque des revendications précédentes, **caractérisé en ce que** tous les segments lumineux (23a, ..., 23n) du deuxième faisceau lumineux (22) présentent une largeur, prise le long de l'axe horizontal repère (HR), identique.

7. Dispositif lumineux (5) selon l'une quelconque des revendications 1 à 5, **caractérisé en ce qu'**au moins deux segments lumineux du deuxième faisceau lumineux (22) présentent une largeur, prise le long de l'axe horizontal repère (HR), différente.

8. Dispositif lumineux (5) selon la revendication précédente, **caractérisé en ce que** les segments lumineux (23a, ..., 23n) du deuxième faisceau lumineux (22) présentent une largeur plus grande à mesure que l'on s'éloigne de l'axe vertical repère (VR).

9. Dispositif lumineux (5) selon l'une quelconque des revendications précédentes, **caractérisé en ce que** l'intensité lumineuse de chaque segment lumineux (23a, ..., 23n) est susceptible d'être modulée individuellement entre un état éteint et un état d'intensité lumineuse maximale.

10. Dispositif lumineux (5) selon la revendication précédentes, **caractérisé en ce que** les segments lumineux (23a, ..., 23n) du deuxième faisceau lumineux (22) peuvent être activés à 50% de leur intensité lumineuse maximale, ou à 70%.

11. Dispositif lumineux (5) selon l'une quelconque des revendications précédentes, **caractérisé en ce que** l'intensité lumineuse des segments lumineux (23a, ..., 23n) du deuxième faisceau lumineux (22) peut être modulée de sorte à ce que le faisceau lumineux global (32) résultant de la superposition du premier faisceau lumineux (12) à coupure et du deuxième faisceau lumineux (22) forme un faisceau de croisement réglementaire.

12. Dispositif lumineux (5) selon l'une quelconque des revendications précédentes, **caractérisé en ce que** l'intensité lumineuse des segments lumineux (23a, ..., 23n) du deuxième faisceau lumineux (22) peut être modulée de sorte à ce que faisceau lumineux global (32) résultant de la superposition du premier faisceau lumineux (12) à coupure et du deuxième faisceau lumineux (22) forme un faisceau d'éclairage de virage dynamique (DBL)

13. Dispositif lumineux (5) selon l'une quelconque des revendications précédentes, **caractérisé en ce que** le deuxième faisceau lumineux (22) présente deux lignes (25) de segments lumineux superposées, les segments lumineux (23a, ..., 23n) de la ligne inférieure étant aptes à éclairer la zone située à cheval sur le premier axe horizontal (H1).

14. Procédé de commande du dispositif lumineux (5) selon l'une quelconque des revendications précédentes, **caractérisé en ce que** l'intensité lumineuse de chacun des segments lumineux (23a, ..., 23n) du deuxième faisceau lumineux situés à cheval sur le premier axe horizontal (H1) est modulée de sorte à ce que la position d'une zone d'intensité lumineuse maximale (24) du faisceau lumineux global (32) formé par la superposition du premier faisceau lumineux (12) et du deuxième faisceau lumineux (22) est décalée en cas de virage du véhicule (1).

15. Procédé de commande du dispositif lumineux (5) selon la revendication précédente, **caractérisé en ce que** le décalage de la zone d'intensité lumineuse maximale (24) est en rapport avec le rayon de courbure du virage.

## Patentansprüche

1. Lichtvorrichtung (5) eines Kraftfahrzeugs (1) aufweisend
- Mittel zur Aussendung eines ersten Lichtbündels (12) mit Hell-Dunkel-Grenze entlang einer optischen Achse (11), wobei die Hell-Dunkel-Grenze (13) eine im Wesentlichen horizontale Linie (14) mit einem Ausschnitt (16) aufweist; wobei sich der Ausschnitt in einem Koordinatensystem erstreckt, das von einer horizontalen Koordinatensystemachse (HR) parallel zu einer ersten horizontalen Achse (H1), die durch die im Wesentlichen horizontale Linie (14) verläuft, und einer vertikalen Koordinatensystemachse (VR) senkrecht zur horizontalen Koordinatensystemachse (HR) und zur optischen Achse (11) gebildet wird, wobei die optische Achse (11) durch den Mittelpunkt des Koordinatensystems verläuft,
- Mittel zur Aussendung eines zweiten Lichtbündels (22), das horizontal in mehrere Lichtsegmente (23a, ..., 23n) aufgeteilt ist, die selektiv aktivierbar sind, wobei die Lichtsegmente (23a, ..., 23n) geeignet sind, einen Bereich zu beleuchten, der sich rittlings auf der ersten horizontalen Achse (H1) befindet;
**dadurch gekennzeichnet, dass** der Ausschnitt (16) Folgendes umfasst
- ein proximales Längsende (16a), das sich im Koordinatensystem entlang der horizontalen Koordinatensystemachse (HR) zwischen 1,25° und 1,5° oder zwischen -1,25° und -1,5° befindet, und
- ein unteres vertikales Ende (16c), das sich im Koordinatensystem entlang der vertikalen Koordinatensystemachse (VR) auf einer Höhe von -0,75° oder darunter befindet.

2. Lichtvorrichtung (5) nach dem vorhergehenden Anspruch, **dadurch gekennzeichnet, dass** sie zwei benachbarte Lichtsegmente (23g, 23h) aufweist, die eine Angrenzung (26) aufweisen, die über der vertikalen Koordinatensystemachse (VR) gelagert ist.

3. Lichtvorrichtung (5) nach einem der vorhergehenden Ansprüche, **dadurch gekennzeichnet, dass** die Lichtsegmente (23a, ..., 23n) des zweiten Lichtbündels (22) ein unteres vertikales Ende (23a1, ..., 23n1) umfassen, und dadurch, dass sich die Höhe des unteren vertikalen Endes (23i1, ..., 23l1) jedes der Lichtsegmente (23i, ..., 231), die mit dem Ausschnitt (16) überlagert sind, im Koordinatensystem entlang der vertikalen Koordinatensystemachse (VR) bei -0,75° oder darunter befindet, und dadurch, dass die Höhe des unteren vertikalen Endes (16c) des Ausschnitts (16) im Wesentlichen identisch zur Höhe des unteren vertikalen Endes des Lichtsegments (23i1, ..., 23l1) ist, das das höchste untere vertikale Ende von allen Lichtsegmenten (23i, ..., 23l) aufweist, die mit dem Ausschnitt (16) überlagert sind.

4. Lichtvorrichtung nach dem vorhergehenden Anspruch, **dadurch gekennzeichnet, dass** sich die unteren vertikalen Enden (23a1, ..., 23n1) jedes Lichtsegments (23a, ..., 23n) des zweiten Lichtbündels (22) alle auf derselben Höhe entlang der vertikalen Koordinatensystemachse (VR) bei -0,75° oder darunter befinden, und dadurch, dass die Höhe des unteren vertikalen Endes (16c) des Ausschnitts (16) im Wesentlichen identisch zur Höhe des unteren vertikalen Endes (23a1, ..., 23n1) der Lichtsegmente (23a, ..., 23n) ist.

5. Lichtvorrichtung (5) nach einem der vorhergehenden Ansprüche, **dadurch gekennzeichnet, dass** die Hell-Dunkel-Grenze (13) des ersten Lichtbündels (12) einen zweiten Ausschnitt (15) mit einem proximalen Längsende (15a) aufweist, das sich im Koordinatensystem entlang der horizontalen Koordinatensystemachse (HR) bei -3° oder weniger befindet, wenn sich das proximale Längsende (16a) des Ausschnitts (16) zwischen 1,25° und 1,5° oder bei 3° oder mehr befindet, wenn sich das proximale Längsende (16a) des Ausschnitts (16) zwischen -1,25° und -1,5° befindet.

6. Lichtvorrichtung (5) nach einem der vorhergehenden Ansprüche, **dadurch gekennzeichnet, dass** alle Lichtsegmente (23a, ..., 23n) des zweiten Lichtbündels (22) entlang der horizontalen Koordinatensystemachse (HR) gemessen eine identische Breite aufweisen.

7. Lichtvorrichtung (5) nach einem der Ansprüche 1 bis 5, **dadurch gekennzeichnet, dass** wenigstens zwei Lichtsegmente des zweiten Lichtbündels (22) entlang der horizontalen Koordinatensystemachse (HR) gemessen eine unterschiedliche Breite aufweisen.

8. Lichtvorrichtung (5) nach dem vorhergehenden Anspruch, **dadurch gekennzeichnet, dass** die Lichtsegmente (23a, ..., 23n) des zweiten Lichtbündels (22) mit zunehmender Entfernung von der vertikalen Koordinatensystemachse (VR) eine größere Breite aufweisen.

9. Lichtvorrichtung (5) nach einem der vorhergehenden Ansprüche, **dadurch gekennzeichnet, dass** die Lichtintensität jedes Lichtsegments (23a, ..., 23n) zwischen einem ausgeschalteten Zustand und einem Zustand maximaler Lichtintensität einzeln moduliert werden kann.

10. Lichtvorrichtung (5) nach dem vorhergehenden Anspruch, **dadurch gekennzeichnet, dass** die Lichtsegmente (23a, ..., 23n) des zweiten Lichtbündels (22) auf 50 % ihrer maximalen Lichtintensität oder auf 70 % aktiviert werden können.

11. Lichtvorrichtung (5) nach einem der vorhergehenden Ansprüche, **dadurch gekennzeichnet, dass** die Lichtintensität der Lichtsegmente (23a, ..., 23n) des zweiten Lichtbündels (22) so moduliert werden kann, dass das Gesamtlichtbündel (32), das sich aus der Überlagerung des ersten Lichtbündels (12) mit Hell-Dunkel-Grenze und des zweiten Lichtbündels (22) ergibt, ein ordnungsgemäßes Abblendlichtbündel bildet.

12. Lichtvorrichtung (5) nach einem der vorhergehenden Ansprüche, **dadurch gekennzeichnet, dass** die Lichtintensität der Lichtsegmente (23a, ..., 23n) des zweiten Lichtbündels (22) so moduliert werden kann, dass das Gesamtlichtbündel (32), das sich aus der Überlagerung des ersten Lichtbündels (12) mit Hell-Dunkel-Grenze und des zweiten Lichtbündels (22) ergibt, ein dynamisches Kurvenlichtbündel (DBL) bildet.

13. Lichtvorrichtung (5) nach einem der vorhergehenden Ansprüche, **dadurch gekennzeichnet, dass** das zweite Lichtbündel (22) zwei übereinander gelagerte Lichtsegmentlinien (25) aufweist, wobei die Lichtsegmente (23a, ..., 23n) der unteren Linie geeignet sind, den Bereich zu beleuchten, der sich rittlings auf der ersten horizontalen Achse (H1) befindet.

14. Verfahren zur Steuerung der Lichtvorrichtung (5) nach einem der vorhergehenden Ansprüche, **dadurch gekennzeichnet, dass** die Lichtintensität jedes der Lichtsegmente (23a, ..., 23n) des zweiten Lichtbündels, die sich rittlings auf der ersten horizontalen Achse (H1) befinden, so moduliert wird, dass die Position eines Bereichs maximaler Lichtintensität (24) des Gesamtlichtbündels (32), das von der Überlagerung des ersten Lichtbündels (12) und des zweiten Lichtbündels (22) gebildet wird, im Falle einer Kurve des Fahrzeugs (1) verschoben wird.

15. Verfahren zur Steuerung der Lichtvorrichtung (5) nach dem vorhergehenden Anspruch, **dadurch gekennzeichnet, dass** die Verschiebung des Bereichs maximaler Lichtintensität (24) mit dem Krümmungsradius der Kurve in Beziehung steht.

## Claims

1. . A lighting device (5) for a motor vehicle (1) comprising:
- a means for emitting a first light beam (12) with cutoff along an optical axis (11), the cutoff (13) having a substantially horizontal line (14) comprising a cutout (16); the cutout extending in a coordinate system formed by a horizontal reference axis (HR) parallel to a first horizontal axis (H1) passing through said substantially horizontal line (14) and a vertical reference axis (VR) perpendicular to the horizontal reference axis (HR) and to said optical axis (11), said optical axis (11) passing through the center of the coordinate system;
- a means for emitting a second light beam (22) horizontally divided into a plurality of selectively activated light segments (23a, ..., 23n), the light segments (23a, ..., 23n) configured to illuminate a region located astride the first horizontal axis (H1), **characterized in that** the cutout (16) comprises:
- a proximal longitudinal end (16a) located in the coordinate system along the horizontal reference axis (HR) between 1.25° and 1.5° or between -1.25° and -1.5°; and
- a lower vertical end (16c) located in the coordinate system along the vertical reference axis (VR) at a height of -0.75° or below.

2. . The lighting device (5) according to the preceding claim, **characterized in that** said lighting device has two neighboring light segments (23g, 23h) having a junction (26) superposed over the vertical reference axis (VR).

3. . The lighting device (5) according to one of the preceding claims, **characterized in that** the light segments (23a, ..., 23n) of the second light beam (22) comprise a lower vertical end (23a1, ..., 23n1) and **in that** the height of the lower vertical end (23i1, ..., 2311) of each of the light segments (23i, ..., 23l) which are superposed with the cutout (16) is located in the coordinate system along the vertical reference axis (VR) at -0.75° or below and **in that** the height of the lower vertical end (16c) of the cutout (16) is substantially the same as the height of the lower vertical end of the light segment (23i1, ..., 2311) which has the highest lower vertical end from among all of the light segments (23i, ..., 23l) which are superposed with the cutout (16).

4. . The lighting device (5) according to the preceding claim, **characterized in that** the lower vertical ends (23a1, ..., 23n1) of each light segment (23a, ..., 23n) of the second light beam (22) are all located at the same height along the vertical reference axis (VR) at -0.75° or below and **in that** the height of the lower vertical end (16c) of the cutout (16) is substantially the same as the height of the lower vertical end (23a1, ..., 23n1) of the light segments (23a, ..., 23n).

5. . The lighting device (5) according to one of the preceding claims, **characterized in that** the cutoff (13) of the first light beam has a second cutout (15) having a proximal longitudinal end (15a) located in the coordinate system along the horizontal reference axis (HR) at -3° or less, when the proximal longitudinal end (16a) of the cutout (16) is located between 1.25° and 1.5°, or at 3° or more, when the proximal longitudinal end (16a) of the cutout (16) is located between -1.25° and -1.5°.

6. . The lighting device (5) according to one of the preceding claims, **characterized in that** all of the light segments (23a, ..., 23n) of the second light beam (22) have a width that is the same when taken along the horizontal reference axis (HR).

7. . The lighting device (5) according to one of claims 1 to 5, **characterized in that** at least two light segments of the second light beam (22) have a width that is different when taken along the horizontal reference axis (HR).

8. . The lighting device (5) according to the preceding claim, **characterized in that** the light segments (23a, ..., 23n) of the second light beam (22) have a width that gets wider with increasing distance from the vertical reference axis (VR).

9. . The lighting device (5) according to one of the preceding claims, **characterized in that** a light intensity of each light segment (23a, ..., 23n) is capable of being individually modulated between an off state and a state of maximum light intensity.

10. . The lighting device(5) according to the preceding claim, **characterized in that** the light segments (23a, ..., 23n) of the second light beam (22) may be activated at 50% of said second light beam's maximum light intensity, or at 70%.

11. . The lighting device(5) according to one of the preceding claims, **characterized in that** the light intensity of the light segments (23a, ..., 23n) of the second light beam (22) may be modulated such that the overall light beam (32) resulting from the superposition of the first light beam (12) with cutoff and of the second light beam (22) forms a regulatory low beam.

12. . The lighting device (5) according to one of the preceding claims, **characterized in that** the light intensity of the light segments (23a, ..., 23n) of the second light beam (22) may be modulated such that the overall light beam (32) resulting from the superposition of the first light beam (12) with cutoff and of the second light beam (22) forms a dynamic bending light (DBL) beam.

13. . The lighting device(5) according to one of the preceding claims, **characterized in that** the second light beam (22) has two superposed lines (25) of light segments (23a, ..., 23n), the light segments of the lower line being able to illuminate the region located astride the first horizontal axis (H1).

14. . A method for controlling the lighting device (5) according to one of the preceding claims, **characterized in that** the light intensity of each of the light segments (23a, ..., 23n) of the second light beam (22) located astride the first horizontal axis (H1) is modulated such that a position of a region of maximum light intensity (24) of the overall light beam (32) that is formed by the superposition of the first light beam (12) and of the second light beam (22) is shifted when the vehicle turns.

15. . The method for controlling the lighting device (5) according to the preceding claim, **characterized in that** a shifting of the region of maximum light intensity (24) is related to a radius of curvature of a turning of the vehicle.
